(19) Europäisches Patentamt
European Patent Office
Office européen des brevets

(11) Publication number: **0 267 966 B1**

# (12) EUROPEAN PATENT SPECIFICATION

(45) Date of publication of patent specification: **01.09.93** (51) Int. Cl.$^5$: **G05B 19/23**

(21) Application number: **87903402.3**

(22) Date of filing: **16.05.87**

(86) International application number:
**PCT/JP87/00305**

(87) International publication number:
**WO 87/07404 (03.12.87 87/27)**

## (54) POSITIONING SYSTEM.

(30) Priority: **29.05.86 JP 124235/86**

(43) Date of publication of application:
**25.05.88 Bulletin 88/21**

(45) Publication of the grant of the patent:
**01.09.93 Bulletin 93/35**

(84) Designated Contracting States:
**DE FR GB**

(56) References cited:
**DE-B- 2 150 397**
**JP-A-57 141 710**
**JP-A-59 223 818**
**US-A- 4 086 470**

(73) Proprietor: **FANUC LTD.**
**3580, Shibokusa Aza-Komanba, Oshino-mura**
**Minamitsuru-gun, Yamanashi 401-05(JP)**

(72) Inventor: **ISOBE, Shinichi**
**Hinodai-haitsu 516 1-1-1, Hinodai Hino-shi**
**Tokyo 191(JP)**
Inventor: **KAGAWA, Yoshimasa**
**1994-227, Hazama-cho Hachioji-shi**
**Tokyo 193(JP)**

(74) Representative: **Brunner, Michael John et al**
**GILL JENNINGS & EVERY, Broadgate House,**
**7 Eldon Street**
**London EC2M 7LH (GB)**

EP 0 267 966 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a positioning system for use in a numerical control apparatus, a robot control apparatus, or the like, and more particularly to a positioning system which uses a feedback signal as a positional information signal to effect highly accurate and high-speed positioning operation.

Conventional positioning systems have employed a pulse train having a certain weight as a feedback signal. One example of such an arrangement is shown in FIG. 3 of the accompanying drawings. Denoted in FIG. 3 at 1 is a pulse distributor for generating distribution pulses in response to a tape input or the like, 2 a command processor for comparing pulses from the pulse distributor 1 and feedback pulses to issue a servo command signal, 3 a servoamplifier responsive to a servo command signal from the command processor 2 for driving a servomotor 4 to actuate a movable unit (not shown), the servomotor 4 including an encoder 5 as a position detector coupled to the shaft of the servomotor 4 for generating feedback pulses 8 as a feedback signal, and 7 an up/down counter for counting feedback pulses 8, the count being read by the command processor 2.

For numerical control apparatus and the like, there are demands for higher positioning accuracy and higher pulse distribution rate. The conventional systems find difficulty in meeting such demands.

More specifically, the pulse distribution rate of the conventional systems is of the order of 1 MHz because of the characteristics of the transmission path for feedback pulses. The rate of the resolution "0.1 micron/pulse" at the pulse distribution rate is given by:

$$0.1 \times 10^{-6} \times 10^{6} \times 60 = 6$$

$$(m/p) \qquad (p/s) \qquad (m/min)$$

0.1. x $10^{-6}$ indicates a numerical value representing "0.1 micron/pulse" in terms of m (meter), $10^6$ indicates the transmission rate for feedback pulses (1 MHz expressed by pps), and 60 indicates a numerical value for conversion to a value per minute. From the above equation, the speed of movement of the movable unit is 6 m/minute, indicating a problem that a sufficiently high speed cannot be obtained.

US-A-4086470 discloses a positioning system in which pulse signals are transmitted from an encoder to tachometer circuits, which analyse the pulse signals and transmit further signals to an up/down counter.

It is an object of the present invention to provide a positioning system which will solve the aforesaid problems and is capable of high-speed positioning operation even at highly accurate resolution.

According to the present invention, there is provided a positioning system comprising a servomotor rotatable in response to a servo command value for moving a movable unit, a position detector mounted on said servomotor or the movable unit and producing a signal indicative of the position of the servomotor or movable unit, positional information generating means responsive to the output of the position detector and producing a digital signal representing the actual position or change of position of the servomotor or movable unit, and command means for comparing the output signal of the positional information generating means with a command value to issue a servo command value to the servomotor, characterised in that: the positional information generating means is mounted together with said position detector on the servomotor or movable unit.

Since the feedback signal is a positional information signal for the servomotor or the movable unit, this signal is read at given periods by a command processor which calculates the distance by which the movable unit is moved from a preceding positional information signal.

For example, assuming that the resolution is 0.1 micron/pulse and the maximum range of movement of the movable unit is 100 m, the range may be expressed in the binary notation as follows:

$$100 \div (0.1 \times 10^{-6}) = 10^{9} \approx 2^{30}$$

and hence can be represented in 30 bits. If the sampling period of the command processor is 1 ms, then the pulse transmission rate may be 30 bits per 1 ms,

$$30 \text{ (bits)} \div 1 \text{ (ms)} = 30 \times 10^{3} \text{ (bits/s)}.$$

Therefore, the feedback signal can be transmitted at a sufficiently low transmission rate.

In the drawings:

FIG. 1 is a block diagram of a positioning system according to an embodiment of the present invention;

FIG. 2 is a block diagram of an encoder; and

FIG. 3 is a block diagram of a conventional positioning system.

An embodiment of the present invention will hereinafter be described in specific detail with reference to the drawings.

FIG. 1 shows in block form a positioning system according to an embodiment of the present invention. Designated in FIG. 1 at 1 is a pulse distributor for generating distribution pulses in response to a tape input or the like, 2 a command processor for comparing pulses from the pulse distributor 1 and feedback pulses to issue a servo command signal, and 3 a servoamplifier responsive to a servo command signal from the command processor 2 for driving a servomotor 4 to actuate a movable unit (not shown), the servomotor 4 including an encoder 5 as a position detector coupled to the shaft of the servomotor 4. The encoder 5 includes a counter for counting the amount of movement, and a parallel-serial converter for converting the count of the counter to a serial signal. The servomotor 4 generates a feedback signal 6 indicative of the present position of the movable unit. The feedback signal 6 is shown here as an 8-bit signal for convenience. A serial-parallel converter 7 is responsive to the serial feedback signal 6 for converting the same to a parallel signal. The command processor 2 reads the parallel signal, i.e., the present position of the movable unit, calculates the difference between the present position thus read and the present position in the preceding cycle to detect the amount of movement of the movable unit, compares the detected amount of movement and a command value from the pulse generator 1 to find a servo command value, and then issue the servo command value.

The arrangement of the encoder 5 will be described below. FIG. 2 shows the encoder 5 in block form. Denoted in FIG. 2 at 51 is an encoder proper for issuing pulses proportional to the amount of rotation of the servomotor, 52 an up/down counter for counting the pulses from the encoder proper and issues a value indicative of the count, and 53 a parallel-serial converter for reading the output from the up/down counter 52, converting the read output to a serial signal, and issuing the serial signal, which is shown as an 8-bit serial signal for convenience.

Since the feedback signal is used as a present position signal in the present embodiment, the transmission rate for the feedback signal may be low as compared with the pulse feedback signal, and a wide choice is available of constants of filters for preventing noise in the transmission path, resulting in increased reliability of the transmission path.

While the encoder coupled to the servomotor is used as a position detector in the above embodiment, the encoder may be coupled to a ball screw or the like of the movable unit separately from the servomotor. Instead of the encoder, a resolver, an electromagnetic linear scale, an optical linear scale, or the like may be employed as a position detector.

The present position of the movable unit is used as a positional information signal in the above embodiment. However, the amount by which the movable unit is moved in a certain period of time may be detected by the encoder 5 and may be used as a positional information signal.

With the present invention, as described above, the positioning feedback signal is used as a positional information signal representing positional information. Therefore, a high speed of movement is made possible at high resolution even if the transmission rate along the feedback transmission path is low. Moreover, the reliability of the transmission path for the feedback signal is increased.

## Claims

**1.** A positioning system comprising a servomotor (4) rotatable in response to a servo command value for moving a movable unit, a position detector (5) mounted on said servomotor or the movable unit and producing a signal indicative of the position of the servomotor or movable unit, positional information generating means (5) responsive to the output of the position detector (5) and producing a digital signal representing the actual position or change of position of the servomotor or movable unit, and command means (2) for comparing the output signal of the positional information generating means (5) with a command value to issue a servo command value to the servomotor (4), characterised in that: the positional information generating means (5) is mounted together with said position detector (5) on the servomotor or movable unit.

**2.** A positioning system according to claim 1 wherein the positional information signal is fed back as a serial signal.

3. A positioning system according to claim 1 or claim 2, wherein the positional information generating means includes an encoder (51) and an up/down counter (52), the positional information signal being obtained by counting an output from the encoder.

## Patentansprüche

1. Positioniersystem mit einem Servomotor (4), der entsprechend einem Servobefehlswert eine bewegliche Einheit drehbar antreibt, einem am Servomotor oder der beweglichen Einheit angeordneten Positionswandler (5), der ein die Position des Servomotors oder der beweglichen Einheit anzeigenden Signal liefert, auf den Ausgang des Positionswandlers (5) ansprechende Mittel (5) zum Erzeugen einer Positionsinformation in Form eines digitalen Signals, das den Istwert der Position bzw. die Positionsänderung des Servomotors oder der beweglichen Einheit darstellt, und mit einer Befehlsschaltung (2) zum Vergleichen des Ausgangssignals der Mittel (5) zum Erzeugen der Positionsinformnation mit einem Befehlswert, um einen Servobefehlswert an den Servomotor (4) zu liefern,
dadurch gekennzeichnet, daß die Mittel (5) zum Erzeugen der Positionsinformation zusammen mit dem Positionswandler (5) am Servomotor oder der beweglichen Einheit angeordnet sind.

2. Positioniersystem nach Anspruch 1, bei dem das Positionsinformationssignal als serielles Signal zurückgeführt wird.

3. Positioniersystem nach Anspruch 1 oder 2, bei dem die Mittel zum Erzeugen der Positionsinformation eine Kodiereinrichtung (51) und einen Aufwärts/Abwärtszähler (52) aufweisen und das Positionsinformationssignal durch Zählen des Ausgangs des Kodiereinrichtung erhalten wird.

## Revendications

1. Système régulateur de position comportant un servomoteur (4) admettant la rotation en réponse à une valeur de servo-commande de déplacement d'un dispositif mobile, un capteur de position (5) monté sur ledit servomoteur ou le dispositif mobile et produisant un signal indicateur des données de position du servo-moteur ou de dispositif mobile, des moyens générateurs de données de position (5), répondant à la sortie d'un capteur de position (5) et produisant un signal alphanumérique représentant la position effective ou la modification de la position du servomoteur ou du dispositif mobile, et des moyens de commande (2) pour comparer le signal de sortie des moyens générateurs de données de position (5) avec une valeur de commande pour émettre au moteur de servo-commande (4) une valeur de servo-commande, **caractérisé en ce que**: les moyens générateurs de données de position (5) sont montés ensemble avec ledit capteur de position (5) sur le servo-moteur ou sur le dispositif mobile.

2. Système régulateur de position selon la revendication 1, suivant lequel le signal de donnée de position est renvoyée en retour sous forme de signal de série.

3. Système régulateur de position selon la revendication 1 ou la revendication 2, suivant lequel les moyens générateurs de données de position prévoient un encodeur (51) et un compteur de compte/décompte (52), le signal de donnée de position étant obtenu à partir du compte d'une sortie de l'encodeur.

Fig. 1

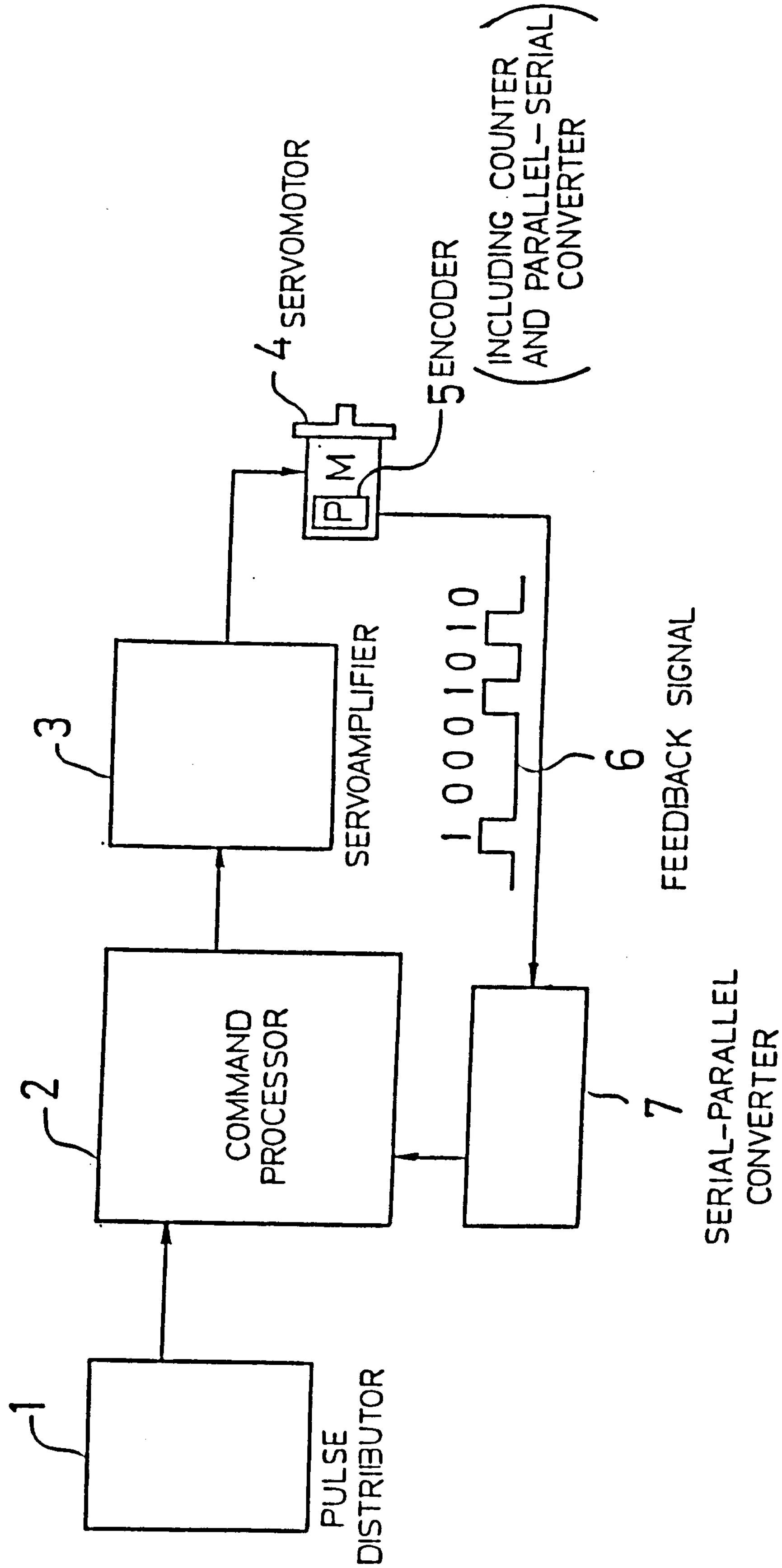
1
PULSE DISTRIBUTOR
2
COMMAND PROCESSOR
3
SERVOAMPLIFIER
4 SERVOMOTOR
P
M
5 ENCODER
(INCLUDING COUNTER AND PARALLEL-SERIAL CONVERTER)
1 0 0 0 1 0 1 0
6
FEEDBACK SIGNAL
7
SERIAL-PARALLEL CONVERTER

Fig. 2

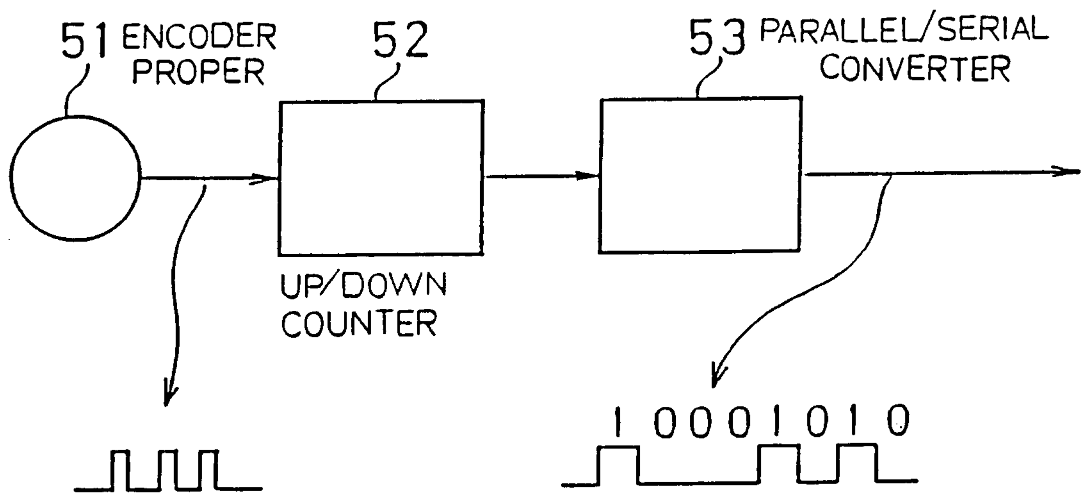
51 ENCODER PROPER
52
53 PARALLEL/SERIAL CONVERTER
UP/DOWN COUNTER
1 0 0 0 1 0 1 0

Fig. 3

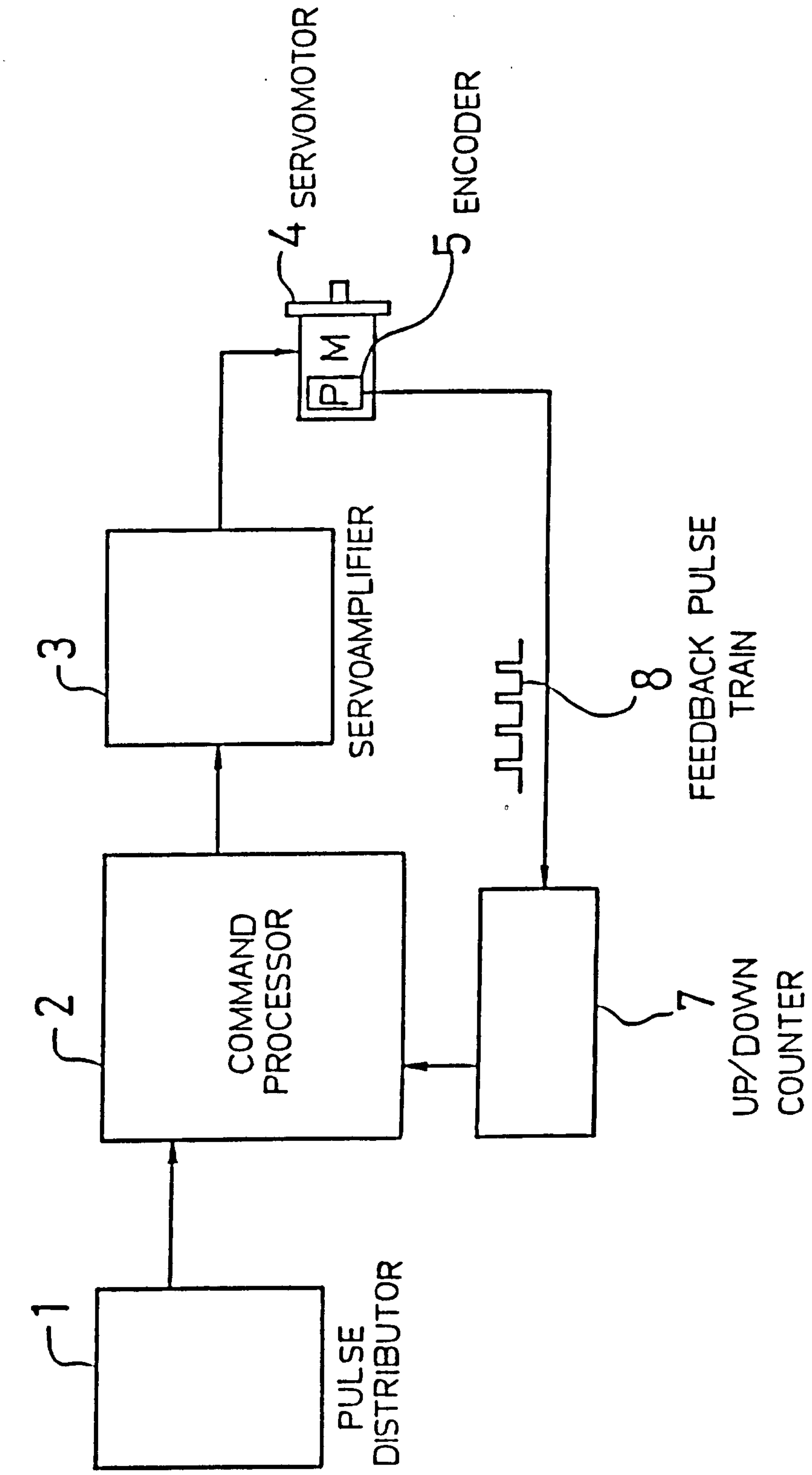
1
PULSE DISTRIBUTOR
2
COMMAND PROCESSOR
3
SERVOAMPLIFIER
4 SERVOMOTOR
5 ENCODER
P
M
8
FEEDBACK PULSE TRAIN
7
UP/DOWN COUNTER